# FASCICULE DE BREVET EUROPEEN

(11) **EP 1 417 582 B1**
(45) Date de publication et mention de la délivrance du brevet: **04.04.2007**
(21) Numéro de dépôt: 02794621.9
(22) Date de dépôt: 02.08.2002
(51) Int. Cl.: G06F 11/14

(54) **ENSEMBLE DE CIRCUITS ELECTRONIQUES COMPORTANT DES MOYENS DE DECONTAMINATION DE PARTIES CONTAMINEES PAR DES ERREURS**
SCHALTKREISKOMPLEX MIT DEKONTAMINIERUNGSMITTELN FÜR MIT FEHLERN KONTAMINIERTE TEILE
ELECTRONIC CIRCUIT ASSEMBLY COMPRISING MEANS FOR DECONTAMINATING ERROR-CONTAMINATED PARTS

(30) Priorité: 10.08.2001 FR 0110734
(43) Date de publication de la demande: 12.05.2004
(73) Titulaire: iRoC Technologies, 38025 Grenoble CEDEX 1 (FR)
(72) Inventeur: NICOLAIDIS, Michel, F-38120 Saint Egrève (FR)
(74) Mandataire: Jouvray, Marie-Andrée
(86) Numéro de dépôt international: PCT/FR2002/002788
(87) Numéro de publication internationale: WO 2003/015282

(56) Documents cités:
- US-A- 5 875 346
- ROBERTS M W: "A FAULT-TOLERANT SCHEME THAT COPES WITH INTERMITTENT AND TRANSIENT FAULTS IN SEQUENTIAL CIRCUITS" PROCEEDINGS OF THE MIDWEST SYMPOSIUM ON CIRCUITS AND SYSTEMS. CHAMPAIGN, AUG. 14 - 16, 1989, NEW YORK, IEEE, US, vol. 1 SYMP. 32, 14 août 1989 (1989-08-14), pages 36-39, XP000139611

## Description

### Domaine technique de l'invention

L'invention concerne un ensemble de circuits électroniques comportant une pluralité de blocs connectés entre eux, des moyens de détection d'erreur dans les données fournies par au moins l'un des blocs et des moyens de décontamination.

### État de la technique

Les systèmes électroniques deviennent de plus en plus sensibles aux aléas à cause de leur miniaturisation et ils sont de plus en plus susceptibles de produire des erreurs. L'introduction de mécanismes de tolérances aux fautes devient indispensable.

Dans certains cas, on veut se prémunir contre les erreurs provenant de certaines parties spécifiques et bien définies, tandis que, dans d'autre cas, on veut se prémunir contre les erreurs provenant de n'importe quelle partie du système.

Pour se prémunir contre les erreurs dues à des fautes transitoires on peut utiliser un mécanisme de détection d'erreur et, en cas de détection d'une erreur, on peut reprendre les opérations à partir d'un état passé du système soigneusement sauvegardé. Dans l'art existant ces reprises se font à partir de l'état global du système, qu'on a pris soin de sauvegarder à des intervalles de temps assez grands en utilisant des procédures logicielles. On doit alors stocker de grandes quantités d'informations représentant l'état global du système. Cette sauvegarde a l'avantage de ne pas exiger une conception particulière des diverses parties du système, notamment d'un processeur, mais nécessite des grandes ressources matérielles, notamment en mémoire. De plus, la procédure de sauvegarde est longue et, par conséquent, ne peut pas être effectuée très fréquemment, car elle affecte de façon importante les capacités de calcul du système. Ainsi, le plus souvent, une reprise est effectuée à partir d'un état passé lointain et sa durée est d'autant plus grande. Finalement, cette technique nécessite le développement d'un logiciel particulier afin de gérer cette procédure. Elle implique donc à un coût de développement récurrent chaque fois qu'on construit un nouveau système.

US5875346 décrit différents moyens de restauration de données en cas de conditions d'exception. En particulier, la figure 4 de ce brevet décrit une implementation adaptée à des circuits LSSD qui génère deux signaux de sorties, un, représentant la valeur actuelle et un, représentant une valeur antérieure.

### Objet de l'invention

L'invention a pour but de réduire le coût de la sauvegarde dans un ensemble de circuits électroniques.

L'invention est réalisée par un ensemble de circuits électronique selon la revendication 1. Des modes préférentiels d'implémentation sont décrits dans les revendications dépendantes.

Selon l'invention, ce but est atteint par le fait que les moyens de décontamination comportent au moins un circuit de sauvegarde et de reconstitution des états passés d'une bascule associée à un bloc de l'ensemble, le circuit de sauvegarde et de reconstitution comportant un multiplexeur et un registre tampon, du type premier entré, premier sorti, le multiplexeur comportant une première entrée connectée directement à la sortie de la bascule et une seconde entrée connectée à ladite sortie par l'intermédiaire dudit registre tampon.

Selon un développement de l'invention, l'ensemble comporte des moyens de commande pour contrôler le registre tampon et le multiplexeur pendant une phase de fonctionnement normal et pendant une phase de décontamination, suivant la détection d'une erreur, de manière à :
- activer en écriture le registre tampon pendant des cycles de sauvegarde prédéterminés pendant la phase de fonctionnement normal,
- connecter la sortie du multiplexeur à sa première entrée à chaque cycle, pendant la phase de fonctionnement normal, et
- activer en lecture le registre tampon et connecter la sortie du multiplexeur à sa seconde entrée pendant des cycles prédéterminés de la phase de décontamination.

### Description sommaire des dessins

D'autres avantages et caractéristiques ressortiront plus clairement de la description qui va suivre de modes particuliers de réalisation de l'invention donnés à titre d'exemples non limitatifs, et représentés aux dessins annexés, dans lesquels :
La figure 1 représente une partie d'un ensemble de circuits dans lequel l'invention peut être utilisée.
La figure 2 représente un mode particulier de réalisation de l'invention pour un ensemble de circuits du type représenté à la figure 1.
La figure 3 représente un autre ensemble de circuits dans lequel l'invention peut être mise en oeuvre.

### Description de modes particuliers de réalisation.

Un ensemble électronique auquel l'invention peut s'appliquer comporte une pluralité de blocs, connectés entre eux. Un bloc est généralement constitué par un circuit logique, une bascule ou une mémoire. Une bascule est associée à chaque bloc.

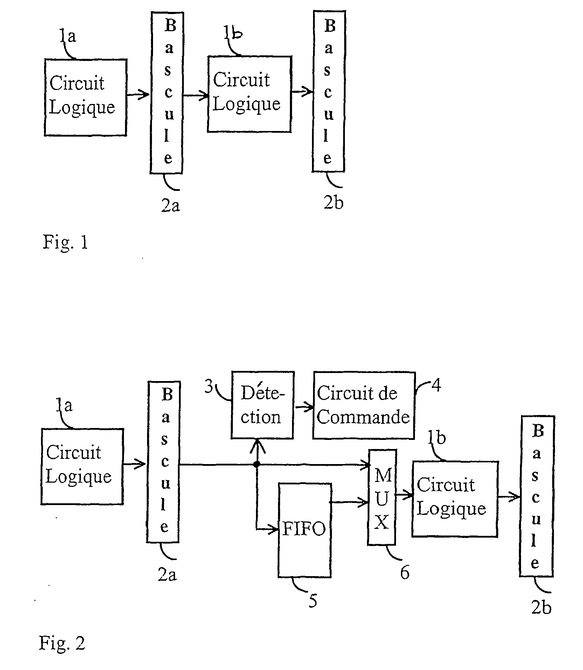

La figure 1 illustre schématiquement une partie d'un ensemble de circuits dans lequel l'invention peut être mise en oeuvre. Dans le mode de réalisation représenté, un premier circuit logique 1 a est connecté en série avec une première bascule 2a (associée au circuit logique 1a), un second circuit logique 1b et une seconde bascule 2b (associée au circuit logique 1b). En fonctionnement normal, la propagation des données dans l'ensemble s'effectue pendant des cycles successifs (cycles d'horloge ou, plus généralement, cycle de fonctionnement).

À un moment donné, un bloc de l'ensemble produit une erreur qui se propage dans l'ensemble pendant q cycles de fonctionnement avant que l'erreur soit détectée et une procédure de décontamination déclenchée. De manière générale, une erreur due à une faute transitoire, se produisant à un cycle n°0, peut se propager au maximum pendant les q cycles suivants, jusqu'à l'instant où elle a été détectée et une phase de décontamination engagée. Cette erreur est donc présente pendant q+1 cycles de fonctionnement. Une phase de décontamination doit permettre d'effectuer une reprise à partir d'un cycle qui précède le cycle n°0 afin de corriger l'erreur introduite pendant ce cycle.

Dans chaque ensemble, lorsque les blocs susceptibles de produire une erreur à leur sortie sont bien identifiés, il est possible de déterminer quels sont les blocs de l'ensemble susceptibles d'être affectés par cette erreur. Soit d la distance entre deux composants de l'ensemble correspondant au nombre de cycles nécessaires pour qu'une donnée provenant de l'un des composants soit prise en compte, directement ou indirectement, par l'autre composant. Dans un ensemble, seules les bascules associées aux blocs potentiellement générateurs d'erreur, ainsi que les bascules situées en aval et à une distance inférieure ou égale à q, peuvent être affectées par l'erreur. De plus, plus une de ces bascules est proche d'un bloc susceptible de produire une erreur, plus tôt elle sera affectée par l'erreur. Ainsi, la distance dmin la plus petite qui sépare une bascule des blocs susceptibles de produire une erreur et qui se trouvent en amont de la bascule, va déterminer le premier cycle (cycle n° dmin) pendant lequel la bascule va être affectée par l'erreur.

Un cas particulier dans lequel seuls certains blocs prédéfinis peuvent être considérés comme source potentielle d'erreur est le cas d'un ensemble dans lequel le concepteur considère que seuls les blocs de mémoire sont sensibles aux fautes transitoires et sont susceptibles de produire des erreurs.

Selon un premier aspect de l'invention, des ressources de reprise locales, destinées à sauvegarder des états locaux et récents, sont associées à différentes parties de l'ensemble. Après déclenchement de la procédure de décontamination, l'ensemble utilise des circuits de sauvegarde et de reconstitution des états passés de certains blocs pour décontaminer l'ensemble et reconstituer son état correct. Les circuits de sauvegarde et de reconstitution doivent permettre de sauvegarder un nombre k d'états, avec k≥q+1 dans le cas général.

Sur la figure 2, la sortie de la bascule 2a est connectée à l'entrée d'un circuit 3 de détection d'erreur, dont la sortie est connectée à l'entrée d'un circuit de commande 4. La détection d'une erreur par le circuit de détection provoque, par l'intermédiaire du circuit de commande 4, le début d'une phase de décontamination destinée à décontaminer les parties de l'ensemble contaminées par l'erreur.

Un circuit de sauvegarde et de reconstitution des états passés est associé, sur la figure 2, à la bascule 2a. Ce circuit de sauvegarde et de reconstitution comporte un registre tampon 5, du type premier entré, premier sorti, désigné par l'abréviation usuelle FIFO (first input, first output) et comportant r étages. Dans le cas où r=1, le registre tampon 5 est alors constitué par une simple bascule. L'entrée du registre tampon 5 est connectée à la sortie de la bascule 2a associée. Le circuit de sauvegarde et de reconstitution comporte également un multiplexeur 6 comportant une première entrée connectée directement à la sortie de la bascule 2a associée et une seconde entrée connectée à ladite sortie par l'intermédiaire du registre tampon 5. La sortie du multiplexeur est connectée à l'entrée de tous les blocs auxquels devrait être connectée la sortie de la bascule 2a associée s'il n'y avait pas de circuit de sauvegarde et de reconstitution, c'est-à-dire sur la figure 2 à l'entrée du circuit logique 1b.

Pendant une phase de fonctionnement normal, le registre tampon 5 est activé en écriture à chaque cycle. À chaque instant, il sauvegarde ainsi les états des r derniers cycles passés de la bascule 2a associée. La sortie du multiplexeur est alors connectée à sa première entrée, c'est-à-dire à la sortie de la bascule 2a associée.

Pendant la phase de décontamination, le circuit de sauvegarde et de reconstitution doit être capable de fournir, de façon sélective, certains des r états passés qu'il a sauvegardés. Le registre tampon 5 est donc activé en lecture pendant des cycles sélectionnés de la phase de décontamination, le nombre de cycles de la phase de la décontamination pouvant être supérieur à r. En phase de décontamination, la sortie du multiplexeur 6 est connectée à sa seconde entrée, c'est-à-dire à la sortie du registre tampon 5, pendant les cycles sélectionnés de la phase de décontamination. Pendant le reste des cycles de la phase de décontamination, la sortie du multiplexeur est connectée à sa première entrée, c'est-à-dire à la sortie de la bascule correspondante.

Pour chaque erreur provenant d'un bloc donné, les bascules associées à un circuit de sauvegarde et de reconstitution peuvent être réparties en deux groupes :
- un premier groupe de bascules B1, qui sont susceptibles d'être affectées par l'erreur.
- un second groupe de bascules B2, qui ne sont pas susceptibles d'être affectées par l'erreur. Ce second groupe peut lui-même être divisé en deux sous-groupes, un premier sous-groupe de bascules B2₁ qui ne sont pas bloquées pendant certains cycles de la phase de décontamination et un second sous-groupe de bascules B2₂ qui sont bloquées pendant toute la phase de décontamination.

De manière générale, dans un ensemble où seuls certains blocs sont susceptibles de produire des erreurs, les bascules non susceptibles d'être affectées par une erreur sont considérées comme des bascules du second sous-groupe de bascules B2₂ et sont bloquées pendant toute la phase de décontamination pour conserver leur dernier état correct. Néanmoins, pour réduire le coût des circuits de sauvegarde et de reconstitution, il peut être souhaitable de ne pas bloquer en permanence, pendant la phase de décontamination, certaines bascules non susceptibles d'être affectées par l'erreur. Ces bascules, appartenant au premier sous-groupe de bascules B2₁, peuvent alors évoluer et fournir certains de leurs états passés utiles pour retrouver l'état correct des bascules contaminées. Pour les bascules de ce premier sous-groupe, la procédure de décontamination doit être conçue de manière à ce qu'elles retrouvent le dernier état à partir duquel on les fait évoluer.

Le choix des cycles sélectionnés de la phase de décontamination se fera de façon différente, selon que la bascule considérée est une bascule B1, B2₁ ou B2₂.

Dans le cas d'une bascule appartenant au sous-groupe B2₂, c'est-à-dire qui n'est pas susceptible d'être affectée par l'erreur et qui est bloquée par le circuit de commande 4, pendant toute la phase de décontamination, tous les cycles de la phase de décontamination sont des cycles de blocage pendant lesquels la sortie du multiplexeur 6 est connectée à sa seconde entrée, c'est-à-dire à la sortie du registre tampon 5. Ceci est nécessaire car, la bascule 2a étant bloquée, elle ne peut fournir les données requises. Par ailleurs, toutes les données contenues dans le registre tampon 5 sont correctes car il a sauvegardé les états d'une bascule non susceptible d'être affectée par l'erreur. Si l'on utilise un registre tampon dont la taille est supérieure à la taille nécessaire pour effectuer la décontamination, ce registre tampon peut être activé pendant les cycles où les données qu'il fournit ne sont pas utilisées. Pendant ces cycles, la sortie du multiplexeur est alors connectée à sa première entrée, c'est-à-dire à la sortie de la bascule correspondante.

Dans le cas d'une bascule appartenant au sous-groupe B2₁, c'est-à-dire qui n'est pas susceptible d'être affectée par l'erreur mais qui n'est bloquée par le circuit de commande 4 que pendant certains cycles de la phase de décontamination, la sortie du multiplexeur 6 est connectée à sa seconde entrée, c'est-à-dire à la sortie du registre tampon 5, à partir du premier cycle de la phase de décontamination, pendant lequel le registre tampon est activé en lecture, et jusqu'au cycle de déblocage de la bascule 2a considérée. Après déblocage de la bascule, la sortie du multiplexeur peut alors être connectée indifféremment à sa première ou à sa seconde entrée, c'est-à-dire soit à la sortie de la bascule 2a, soit à la sortie du registre tampon 5. En effet, la bascule 2a n'étant plus bloquée, elle fournit des données correctes à partir de données correctes qui lui sont fournies par des étages (non représentés) disposés en amont. D'autre part, le registre tampon 5, qui a sauvegardé les états d'une bascule non affectée par l'erreur, fournit également les données correctes requises.

Dans le cas d'une bascule appartenant au groupe B1, c'est-à-dire d'une bascule susceptible d'être affectée par l'erreur, celle-ci n'est pas bloquée par le circuit de commande 4 pendant la phase de décontamination. Pendant la phase de décontamination, la sortie du multiplexeur 6 est connectée à sa seconde entrée, c'est-à-dire à la sortie du registre tampon 5, sauf pendant les derniers cycles de la phase de décontamination où le registre tampon 5 peut fournir des valeurs erronées, c'est-à-dire pendant les derniers q-dmin cycles de la phase de décontamination. La sortie du multiplexeur est alors connectée à sa première entrée, c'est-à-dire à la sortie de la bascule 2a associée. Ceci permet d'éviter d'utiliser des données erronées qui auraient été introduites dans le registre tampon lors de la sauvegarde d'états de la bascule affectés par l'erreur.

Grâce à un choix approprié de la disposition des différents circuits de sauvegarde et de reconstitution dans l'ensemble de circuits considéré et de l'enchaînement des opérations pendant la phase de décontamination, la bascule 2a associée qui n'est pas bloquée fournit alors des données correctes qui peuvent être fournies par le multiplexeur 6 aux blocs situés en aval, par exemple au bloc logique 1 b sur la figure 2.

Dans un ensemble où seuls certains blocs bien définis sont susceptibles d'être à l'origine d'une erreur, une bascule associée à un tel bloc sera appelée bascule d'origine. Une erreur apparaissant dans un premier temps dans une bascule d'origine se propage avant le déclenchement d'une phase de décontamination aux bascules situées en aval à une distance inférieure ou égale à q. Pour la bascule d'origine, on doit sauvegarder un nombre k d'états. L'état d'une bascule, dite bascule cible, située en aval d'une bascule d'origine peut être restauré de diverses manières, en fonction de la structure de l'ensemble et de la position de la bascule cible dans l'ensemble.

Dans certains cas, pour restaurer l'état d'une bascule cible il est nécessaire de sauvegarder les états d'une ou de plusieurs bascules constituant des prédécesseurs immédiats de la bascule cible. Si une bascule constituant un prédécesseur immédiat peut également être affectée par l'erreur, le nombre d'états à sauvegarder pour ce prédécesseur immédiat est donné par q+1-dminc, où dminc représente la distance minimum séparant la bascule cible de la bascule d'origine. On peut alors utiliser un circuit de sauvegarde et de restauration associé au prédécesseur immédiat pour sauvegarder q+1-dminc états de ce prédécesseur immédiat. Celui-ci pouvant être affecté par l'erreur, certains des q+1-dminc états sauvegardés sont erronés. La distance minimum séparant la bascule constituant le prédécesseur immédiat de la bascule d'origine étant dminp, les états erronés du prédécesseur correspondent aux derniers q+1-dminp cycles de fonctionnement normal, parmi lesquels q-dminp sont sauvegardés. Ainsi, pendant les derniers q-dminp cycles de la phase de décontamination, on n'utilise pas les états sauvegardés mais les états générés par la bascule constituant le prédécesseur immédiat pendant la phase de décontamination. De cette façon, on n'utilise que les états corrects parmi les états sauvegardés.

Si la bascule constituant le prédécesseur immédiat n'est pas affectée par l'erreur, alors les q+1-dminc états sauvegardés sont corrects et sont utilisés pendant la phase de décontamination. Dans ce cas, on peut remplacer le circuit de sauvegarde et de reconstitution de la bascule constituant le prédécesseur immédiat par celui d'autres bascules situées en amont.

Dans d'autres cas, tout bloc de l'ensemble peut être considéré comme susceptible de produire une erreur et, par conséquent, toute bascule de l'ensemble peut être contaminée, soit par une erreur dont elle est elle-même la source, soit par une erreur produite par le circuit logique associé, soit par la propagation d'une erreur produite dans un bloc situé en amont et à faible distance. Chaque bascule pouvant être une bascule d'origine, dmin=0. Si on sauvegarde k états d'une bascule, les derniers q-dmin=q états sauvegardés peuvent être erronés Ainsi, pendant la phase de décontamination, seuls les premiers k-q états sauvegardés seront utilisés pendant les k-q premiers cycles de la phase de décontamination. Pendant les q derniers cycles de la phase de décontamination, on utilisera les états que la bascule correspondante génère dans son évolution pendant la phase de décontamination.

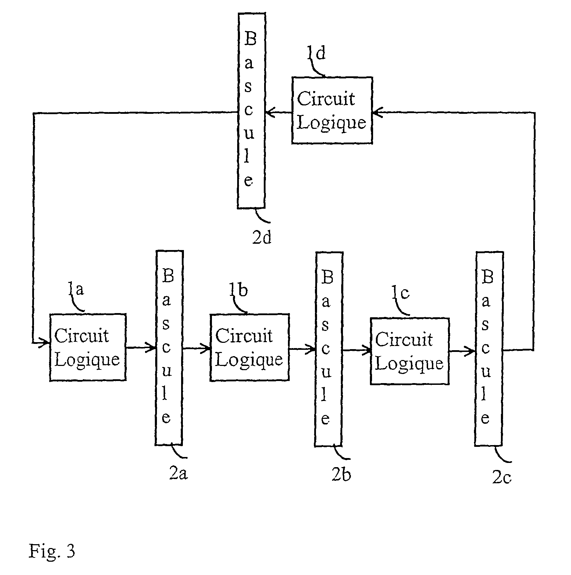

Un exemple va être explicité plus en détail en référence à la figure 3. Dans l'ensemble selon la figure 3, la bascule 2b est connectée en série avec un circuit logique 1 c, une bascule 2c, un circuit logique 1 d et une bascule 2d. La sortie de la bascule 2d est connectée à l'entrée du circuit logique 1 a. On fait l'hypothèse que tous les blocs de cet ensemble sont susceptibles de produire une erreur due à une faute transitoire.

Dans un tel cas, où tout bloc est susceptible de produire des erreurs, toute bascule peut être affectée dès le premier cycle d'occurrence de l'erreur (cycle n°0) car l'erreur peut survenir sur la bascule elle-même ou sur le circuit logique associé. La valeur r doit alors être supérieure ou égale à k.

Dans une première variante de réalisation, un circuit de détection d'erreur est associé à chaque bloc et des moyens de décontamination, permettant de sauvegarder et reconstituer des états sont prévus pour décontaminer le système. Dans un mode de réalisation préférentiel, un circuit de détection d'erreur 3 est connecté à la sortie de chacune des bascules (2a, 2b, 2c et 2d), de manière à détecter toute erreur survenant dans la bascule ou le circuit logique dont la sortie est connectée à l'entrée de la bascule considérée. On suppose également que le délai nécessaire pour la détection de l'erreur par un circuit de détection 3 est tel que l'erreur a le temps de se propager à la bascule suivante (q=1). Une erreur est donc susceptible d'affecter l'ensemble pendant 2 cycles de fonctionnement.

On suppose également que les blocs susceptibles d'être affectés par une erreur ne disposent pas de circuit de correction d'erreur. Dans ce cas, il est nécessaire de sauvegarder au moins les états des k=q+1=2 cycles passés. Dans ces conditions un circuit (5, 6) de sauvegarde et de reconstitution, du même type que celui décrit en regard de la figure 2, est associé à chaque bascule (2a, 2b, 2c et 2d). Pour permettre la sauvegarde des 2 derniers cycles (soit le cycle précédant le cycle n°0 et le cycle précédant le cycle n°1), on choisit des registres tampon ayant chacun une taille r=k=2. La phase de décontamination comporte alors 2 cycles. Le registre tampon est activé en lecture au moins pendant le premier cycle. Il peut également être activé en lecture pendant le cycle suivant, mais ce n'est pas obligatoire. Toutes les bascules étant susceptibles d'être affectées par l'erreur, elles appartiennent toutes au groupe B1. De plus, chaque bascule peut être affectée par une erreur pendant les q+1-dmin derniers cycles précédant le déclenchement de la phase de décontamination. Dans le cas particulier considéré, q=1 et dmin=0 puisque la bascule elle-même peut être une source d'erreur. Ainsi q-dmin=1 et le dernier état sauvegardé dans le registre tampon sera erroné. La sortie de chaque multiplexeur 6 est connectée à sa seconde entrée, c'est-à-dire à la sortie du registre tampon 5 correspondant pendant le premier cycle de la phase de décontamination. Par contre, elle est connectée à sa première entrée, c'est-à-dire à la sortie de la bascule correspondante pendant le dernier cycle (q-dmin=1) de la phase de décontamination.

Dans une seconde variante de réalisation, on choisit d'associer un circuit de sauvegarde et de reconstitution (5, 6) à une seule bascule de l'ensemble selon la figure 3, par exemple à la bascule 2a. Dans ce cas, le nombre d'états passés devant être sauvegardés pour reconstituer l'état de l'ensemble est plus important. Dans l'ensemble représenté sur la figure 3, le registre tampon 5 associé à la bascule 2a aura alors une taille r=5 afin de pouvoir sauvegarder l'état précédant le cycle n°1 (cycle n°0 dont l'état est erroné) ainsi que les états des 4 cycles précédant le cycle n°0. La phase de décontamination a alors une durée de 5 cycles. Le registre tampon est activé en lecture au moins pendant les 4 premiers cycles de la phase de décontamination. Pendant le cycle suivant, il peut ou non être activé en lecture. Ceci est sans effet sur le fonctionnement du système car le multiplexeur connecte alors sa sortie à sa première entrée. La bascule 2a, pouvant être affectée par l'erreur, fait partie du groupe B1. De plus, puisque q=1, alors q+1-dmin =2 et elle peut être affectée par un erreur pendant les deux derniers cycles précédant le déclenchement de la phase de décontamination. La sortie du multiplexeur 6 est connectée à sa seconde entrée, c'est-à-dire à la sortie du registre tampon 5 pendant les 4 premiers cycles de la phase de décontamination. Par contre, elle est connectée à sa première entrée, c'est-à-dire à la sortie de la bascule 2a pendant le dernier cycle (q-dmin=1, car dmin =0 puisque la bascule elle-même peut être une source d'erreur) de la phase de décontamination.

La valeur k=q+1 est généralement la valeur la plus économique en ressources matérielles. Ceci n'est cependant pas toujours vrai ainsi que cela ressort par exemple des deux variantes décrites ci-dessus en référence à la figure 3. Dans la première variante, avec 4 circuits de sauvegarde et de reconstitution (un par bascule) comportant chacun un multiplexeur et un registre tampon à 2 étages, le nombre k d'états sauvegardés est égal à 2, soit k=q+1. Par contre, dans la seconde variante, avec un seul circuit de sauvegarde et de reconstitution, comportant un multiplexeur et un registre tampon à 5 étages, le nombre k d'états sauvegardés, égal à 5, est supérieur à q+1. Ainsi, le coût matériel peut être moindre bien que le nombre d'états à sauvegarder soit plus important. De plus, dans la seconde variante, en choisissant comme bascule à laquelle est associé le circuit de sauvegarde et de reconstitution, la bascule de l'ensemble ayant le plus petit nombre de bits, il est possible de réduire au minimum la taille du registre tampon et du multiplexeur associé.

Dans les exemples décrits ci-dessus, l'ensemble ne comporte pas de circuit spécifique de correction d'erreur. Le nombre k d'états à stocker est alors tel que k≥q+1.

Il est également possible d'utiliser l'invention dans un ensemble comportant des blocs protégés, c'est-à-dire des blocs avec des capacités de détection et de correction d'erreur. Dans l'art antérieur, notamment dans les ensembles comportant des mémoires munies de codes de détection et de correction d'erreur, le fonctionnement de l'ensemble est ralenti pour permettre de corriger une erreur avant sa propagation dans l'ensemble.

Selon un second aspect de l'invention, on laisse alors les données produites par un bloc protégé se propager systématiquement dans l'ensemble sans attendre la correction éventuelle d'une erreur. Si, à un instant donné, une erreur est détectée à la sortie d'un bloc protégé, cette sortie erronée est corrigée par le circuit de correction associé et la sortie corrigée est utilisée en coopération avec des circuits de sauvegarde et de reconstitution d'états passés pour décontaminer les blocs du système qui ont entre temps été contaminés par l'erreur qui s'est propagée. Si l'erreur se produit au cycle n°0 et se propage pendant les q cycles suivants, il faut effectuer la reprise à partir du cycle 0 ou de tout autre cycle le précédant. L'erreur survenue pendant le cycle n°0 étant corrigée par le circuit de correction associé au bloc protégé, il est possible d'effectuer la reprise à partir du cycle n°0. On pourra donc limiter le nombre k d'états à sauvegarder à k≥q et la valeur r à r≥k= q. Le cas dans lequel k=q est généralement le plus économique en ressources matérielles.

Selon un autre mode de réalisation, chaque état d'une bascule (2) n'est pas systématiquement écrit dans le registre tampon (5) associé, mais seuls les états de la bascule correspondant à des cycles prédéterminés sont écrits dans le registre tampon. Ceci présente un double intérêt :
- Tout d'abord, un choix judicieux de ces cycles permet d'ignorer l'état de certaines bascules, réduisant ainsi le coût des moyens de sauvegarde et de reconstitution. À titre d'exemple, l'état de plusieurs bascules internes d'un processeur peut être inutile pendant un premier cycle d'exécution d'une instruction. Ainsi, dans un tel cas, en choisissant toujours comme cycle de sauvegarde le premier cycle d'une instruction, il est possible d'éviter l'utilisation de registres tampons et de multiplexeurs associés à ces bascules.
- De plus, on peut, dans ce cas, utiliser des registres tampons (5) de taille réduite. En effet, il suffit alors d'utiliser un registre tampon (5) à deux étages pour chaque bascule (2) comportant des états utiles pendant les cycles choisis comme cycles de sauvegarde. À titre d'exemple, considérons trois cycles de sauvegarde successifs, C1, C2 et C3 espacés entre eux de plusieurs cycles, et une détection d'erreur qui survient entre les cycles de sauvegarde C2 et C3, s cycles après le cycle de sauvegarde C2, l'ensemble ne disposant pas de moyens de correction d'erreur mais uniquement de moyens de détection d'erreur. Dans ce cas, si s>q, alors l'erreur est survenue après le cycle C2. Les états sauvegardés pendant le cycle de sauvegarde C2 sont alors corrects et peuvent être utilisés pour reconstituer l'état correct de l'ensemble. Par contre, si s≤q, alors l'erreur est survenue pendant ou avant le cycle C2. Les états sauvegardés dans le registre tampon (5) pendant ce cycle de sauvegarde peuvent alors être erronés. Il est alors nécessaire d'utiliser les états sauvegardés pendant le cycle C1 pour faire la décontamination. Un registre tampon (5) à deux étages est alors nécessaire et ce sont les états sauvegardés à l'avant-dernier cycle de sauvegarde qui sont alors utilisés. Dans le cas où s>q, chacun des états sauvegardés dans le registre tampon peut être utilisé, le dernier état nécessitant moins de cycles pour effectuer la décontamination.

Une utilisation de registres tampons (5) à deux étages est, par ailleurs, suffisant si on choisit des cycles de sauvegarde consécutifs Ci et Ci+1 distants d'au moins q cycles. De cette façon, au moment de la détection, seul un étage du registre tampon peut être affecté par les erreurs.

Dans le cas où l'ensemble dispose de moyens de correction d'erreur associés aux bascules contenant de l'information utile pendant les cycles de sauvegarde, alors les registres tampons peuvent avoir un seul étage. En effet, dans ce cas, même si la détection survient s cycles après le dernier cycle de sauvegarde, avec s≤q, les moyens de correction peuvent être utilisés pour corriger l'état sauvegardé dans chaque registre tampon. Cependant, dans ce cas également, on prendra soin de choisir des cycles de sauvegarde consécutifs distants d'au moins q cycles.

Du point de vue du coût matériel, il est également intéressant de réduire de deux à un le nombre des étages du registre tampon (5) dans le cas où l'ensemble ne dispose que de moyens de détection.

Une première approche consiste à accepter une certaine probabilité d'avoir une décontamination produisant des résultats erronés. À titre d'exemple, si la distance entre deux cycles de sauvegarde est au moins de 100 cycles et si les erreurs peuvent se propager pendant un cycle, l'utilisation d'un registre tampon à un seul étage ne permet pas d'effectuer correctement la décontamination pour des erreurs survenant pendant un cycle de sauvegarde. Cependant, la probabilité d'un tel événement est inférieure à 1%, ce qui peut être acceptable dans de nombreuses applications. L'augmentation de la distance séparant deux cycles de sauvegarde successifs permet de réduire cette probabilité de la manière désirée.

Une autre approche consiste à réduire à zéro la valeur de q. Cela signifie qu'une erreur est détectée pendant le cycle au cours duquel elle survient et que le blocage est réalisé avant que l'erreur ne se propage de la bascule dans laquelle elle est survenue vers les bascules des étages suivants et vers le registre tampon associé. Ainsi, si une erreur survient pendant un cycle de sauvegarde, elle n'a pas le temps de se propager dans le registre tampon et l'étage unique de celui-ci contient l'état correct, sauvegardé lors du cycle de sauvegarde précédent. Bien sûr, si l'erreur survient pendant un autre cycle, elle n'affecte pas non plus le registre tampon.

Diverses techniques peuvent être utilisées pour obtenir q=0. Une valeur de q supérieure à zéro peut être due à deux facteurs :
- le délai du circuit de détection d'erreur est long et, ainsi, le calcul du signal de détection d'erreur déborde sur le cycle suivant l'apparition de l'erreur,
- le signal de détection d'erreur correspondant aux erreurs survenues dans un cycle n'est généré qu'à la fin de ce cycle, ce qui permet de vérifier les valeurs produites pendant ce cycle pendant toute la durée de celui-ci.

Il est nécessaire d'éliminer ces facteurs uniquement pendant les cycles de sauvegarde.

Ainsi, pour éliminer le premier facteur, il est possible d'augmenter la durée des cycles de sauvegarde, c'est-à-dire d'augmenter la période de l'horloge pendant ces cycles. A titre d'exemple, si la distance entre deux cycles de sauvegarde est supérieure à 10 cycles et si la durée des cycles de sauvegarde est augmentée de 30%, la perte globale de performance n'est que de 3%.

Pour éliminer le second facteur, le signal de détection d'erreur est produit pendant les cycles de sauvegarde plus tôt que dans les autres cycles. Le signal de détection d'erreur peut ainsi être produit à l'intérieur du cycle de sauvegarde. Des erreurs survenant à la fin du cycle de sauvegarde peuvent alors ne pas être détectées, mais ceci n'affecte pas la détection des erreurs survenant dans d'autres cycles et peut être négligé.

Si les deux facteurs sont présents, il est possible de combiner le principe de l'augmentation de la durée des cycles de sauvegarde et le principe de la production du signal d'erreur plus tôt dans les cycles de sauvegarde que dans les autres cycles.

Dans ce qui précède, nous avons considéré que toutes les bascules auxquelles sont associés des registres tampon reçoivent des entrées à chaque cycle d'horloge. Néanmoins, dans un ensemble certaines bascules peuvent être contrôlées par un signal (« halt ») qui bloque la bascule quand il est actif. La bascule maintient donc son état du cycle précédent quand le signal « halt » est actif. Dans d'autres cas, l'horloge d'une bascule est dérivée de l'horloge du système par le biais d'un circuit logique, par exemple d'une porte OU, qui reçoit en entrée le signal de l'horloge du système et un ou plusieurs signaux logiques et génère en sortie l'horloge (« gated clock ») de la bascule. Ainsi, ces signaux logiques conditionnent l'horloge de la bascule qui sera bloquée pendant les cycles où ces signaux logiques prennent certaines valeurs. Le résultat est que la bascule maintient son état du cycle précédent à chaque cycle pendant lequel son horloge est bloquée.

Lors de la construction des circuits de décontamination, il faut tenir compte des différents types de signaux de contrôle de bascule, du type « halt » au autre, ou d'une horloge conditionnée par d'autres signaux logiques (c'est à dire d'une horloge du type « gated clock »). Pour ce faire nous allons procéder de la façon suivante :

En général, les signaux logiques qui contrôlent une bascule ou qui conditionnent un signal d'horloge sont générés par certains blocs du système. Alors, dans l'architecture initiale du système, c'est-à-dire avant l'introduction des circuits de décontamination, les signaux de contrôle d'une bascule et les signaux qui conditionnent son horloge sont considérés comme entrées de la bascule, de la même façon que les signaux qui portent les données en écriture dans la bascule. Ainsi, pour les bascules qui ne sont pas bloquées pendant la décontamination, la construction des circuits de décontamination tiendra compte de ces signaux et rajoutera les circuits nécessaires (comme décrit précédemment) pour générer sur ces signaux pendant la phase de décontamination les mêmes valeurs qu'en fonctionnement normal.

En ce qui concerne les registres tampon (ou FIFO), dans la description ci-dessus, ils sont activés en écriture à chaque cycle du fonctionnement normal et en lecture pendant des cycles prédéterminés de la phase de décontamination. Mais ceci ne prend pas en compte le cas des signaux de contrôle de la bascule associée au FIFO ni le cas des signaux de conditionnement de l'horloge de cette bascule. Ces signaux peuvent bloquer la bascule pendant certains cycles de la phase de fonctionnement et il faut que le FIFO génère sur sa sortie pendant la décontamination les mêmes valeurs que génère sa bascule associée en fonctionnement normal. Pour ce faire, on peut utiliser une des techniques suivantes :
- On ignore les signaux de conditionnement de l'horloge de la bascule associée et on envoie sur le FIFO l'horloge du système (c'est à dire sans conditionnement) pendant la phase de fonctionnement et pendant la phase de décontamination. On ignore aussi les signaux de contrôle de la bascule associée, c'est-à-dire on n'utilise pas ces signaux dans le contrôle du FIFO, ni en fonctionnement normal ni pendant la décontamination. Ainsi, le FIFO est toujours en écriture pendant le fonctionnement normal et en lecture pendant les cycles prédéterminés de la phase de décontamination, comme décrit précédemment. Ainsi, si la bascule est bloquée pendant un cycle du fonctionnement normal (par le signal « halt » ou par son horloge) elle conserve sa valeur précédente. Cette valeur est fournie au FIFO pendant les deux cycles et est stockée dans des étages consécutifs du FIFO, qui va la fournir sur sa sortie pendant des cycles consécutifs de la décontamination. Ainsi le FIFO fournira pendant la décontamination les mêmes valeurs que celles qui sont fournies par la bascule associée pendant le fonctionnement normal.
- Pendant le fonctionnement normal, on utilise le signal de contrôle du type « hait » de la bascule pour bloquer le FIFO en même temps que la bascule associée, et on utilise pour le FIFO la même horloge que pour la bascule associée (c'est-à-dire du type « halt » le cas échéant). Pour le fonctionnement pendant la décontamination, on va considérer deux cas possibles. Dans le cas où le signal « halt » de contrôle de la bascule associée et les signaux de conditionnement de l'horloge de cette bascule prennent les mêmes valeurs pendant la décontamination qu'en fonctionnement normal, on va aussi utiliser pendant la décontamination le même signal « halt » et le même signal d'horloge pour le FIFO. Dans le cas où le signal « halt » de contrôle de la bascule associée ou les signaux de conditionnement de l'horloge de cette bascule ne prennent pas les mêmes valeurs pendant la décontamination et en fonctionnement normal (ce qui peut arriver si ces signaux ne sont pas générés dans le système ou dans le cas où les bascules des étages qui génèrent ces signaux ne sont pas actifs pendant la décontamination), on va alors utiliser un FIFO pour sauvegarder ces signaux pendant le fonctionnement normal et les fournir au système pendant la phase de décontamination, à l'aide d'un multiplexeur, comme décrit précédemment pour d'autres signaux du système. Ce FIFO aura le même nombre d'étages et sera actif pendant les mêmes cycles du fonctionnement normal et de la décontamination que le FIFO à qui sont destinés le signal « halt » et les signaux de conditionnement de l'horloge.

## Revendications

1. Ensemble de circuits électroniques comportant une pluralité de blocs connectés entre eux, des moyens de détection d'erreur dans les données fournies par au moins l'un des blocs et des moyens de décontamination, les moyens de décontamination comportant au moins un circuit de sauvegarde et de reconstitution des états passés d'une bascule associée à un bloc de l'ensemble, le circuit de sauvegarde et de reconstitution comportant un registre tampon (5), du type premier entré, premier sorti, ensemble **caractérisé en ce que** le circuit de sauvegarde et de reconstitution comporte un multiplexeur, le multiplexeur (6) comportant une première entrée connectée directement à la sortie de la bascule (2a) et une seconde entrée connectée à ladite sortie par l'intermédiaire dudit registre tampon (5).

2. Ensemble selon la revendication 1, **caractérisé en ce que**, un bloc étant associé à un circuit de correction d'erreur et l'erreur pouvant se propager pendant q cycles avant détection et déclenchement d'une phase de décontamination, le registre tampon (5) d'un circuit de sauvegarde et de reconstitution d'une bascule associée audit bloc comporte un nombre d'étages permettant de sauvegarder un nombre (k) d'états supérieur ou égal à q.

3. Ensemble selon la revendication 1, **caractérisé en ce que**, un bloc étant associé à un circuit de détection d'erreur et l'erreur pouvant se propager pendant q cycles avant détection et déclenchement d'une phase de décontamination, le registre tampon (5) d'un circuit de sauvegarde et de reconstitution d'une bascule associée audit bloc comporte un nombre d'étages permettant de sauvegarder un nombre (k) d'états supérieur ou égal à q+1.

4. Ensemble selon l'une quelconque des revendications 1 à 3, **caractérisé en ce qu'**il comporte des moyens de commande (4) pour contrôler le registre tampon (6) et le multiplexeur (5) pendant une phase de fonctionnement normal et pendant une phase de décontamination, suivant la détection d'une erreur, de manière à :
- activer en écriture le registre tampon (5) pendant des cycles de sauvegarde prédéterminés pendant la phase de fonctionnement normal,
- connecter la sortie du multiplexeur (6) à sa première entrée à chaque cycle, pendant la phase de fonctionnement normal, et
- activer en lecture le registre tampon (5) et connecter la sortie du multiplexeur (6) à sa seconde entrée pendant des cycles prédéterminés de la phase de décontamination.

5. Ensemble selon la revendication 4, **caractérisé en ce que** la phase de décontamination commence par lesdits cycles prédéterminés de la phase de décontamination.

6. Ensemble selon l'une des revendications 4 et 5, **caractérisé en ce que**, le circuit de sauvegarde et de reconstitution étant associé à une bascule (2a) de l'ensemble qui n'est pas susceptible d'être contaminée par l'erreur, lesdits cycles prédéterminés de la phase de décontamination sont des cycles de blocage, qui sont suivis par des cycles de déblocage, le dispositif de commande (4) comportant des moyens de blocage de la bascule (2a) pendant les cycles de blocage et de déblocage de la bascule (2a) pendant les cycles de déblocage.

7. Ensemble selon la revendication 6, **caractérisé en ce que** le dispositif de commande (4) comporte des moyens de blocage de la bascule (2a) pendant toute la phase de décontamination, tous les cycles de la phase de décontamination étant des cycles de blocage.

8. Ensemble selon l'une des revendications 4 et 5, **caractérisé en ce que**, le circuit de sauvegarde et de reconstitution étant associé à une bascule de l'ensemble qui est susceptible d'être contaminée par l'erreur, le circuit de commande (4) connecte la sortie du multiplexeur (6) à sa première entrée après lesdits cycles prédéterminés de la phase de décontamination.

9. Ensemble selon l'une quelconque des revendications 1 à 5, **caractérisé en ce que** chaque bloc de l'ensemble étant susceptible d'être affecté par une erreur, un circuit de sauvegarde et de reconstitution est associé à chacune des bascules associées à des blocs prédéterminés de l'ensemble.

10. Ensemble selon la revendication 9, **caractérisé en ce qu'**un circuit de sauvegarde et de reconstitution est associé à chacune des bascules de l'ensemble.

11. Ensemble selon l'une quelconque des revendications 4 à 8, **caractérisé en ce que** deux cycles de sauvegarde consécutifs sont séparés par au moins q cycles.

12. Ensemble selon la revendication 11, **caractérisé en ce que** le registre tampon (5) comporte deux étages.

13. Ensemble selon la revendication 11, **caractérisé en ce que** le registre tampon (5) comporte un seul étage.

14. Ensemble selon la revendication 13, **caractérisé en ce que** deux cycles de sauvegarde successifs sont séparés par au moins 10 cycles.

15. Ensemble selon la revendication 13, **caractérisé en ce que** le signal d'erreur généré en réponse aux états d'un cycle de sauvegarde est produit avant la fin du cycle de sauvegarde.

16. Ensemble selon la revendication 15, **caractérisé en ce que** la durée d'un cycle de sauvegarde est supérieure à la durée des autres cycles.

17. Ensemble selon l'une des revendications 13 et 15, **caractérisé en ce que** le signal d'erreur généré en réponse aux états d'un cycle de sauvegarde est produit plus tôt que les signaux d'erreur générés en réponse aux états des autres cycles.

## Claims

1. Assembly of electronic circuits comprising a plurality of blocks connected to one another, means for detecting errors in the data supplied by at least one of the blocks, and decontamination means, the decontamination means comprising at least one circuit for backup and reconstitution of the past states of a latch associated to a block of the assembly, the backup and reconstitution circuit comprising a buffer register (5) of the first-in first-out type, assembly **characterized in that** the backup and reconstitution circuit comprises a multiplexer (6), the multiplexer (6) comprising a first input connected directly to the output of the latch (2a) and a second input connected to said output by means of said buffer register (5).

2. Assembly according to claim 1, **characterized in that**, a block being associated to an error correction circuit and the error being able to propagate during q cycles before detection and initiation of a decontamination phase, the buffer register (5) of a backup and reconstitution circuit of a latch associated to said block comprises a number of stages enabling a number (k) of states greater than or equal to q to be saved.

3. Assembly according to claim 1, **characterized in that**, a block being associated to an error detection circuit and the error being able to propagate during q cycles before detection and initiation of a decontamination phase, the buffer register (5) of a backup and reconstitution circuit of a latch associated to said block comprises a number of stages enabling a number (k) of states greater than or equal to q+1 to be saved.

4. Assembly according to any one of claims 1 to 3, **characterized in that** it comprises control means (4) to control the buffer register (6) and the multiplexer (5) during a normal operating phase and during a decontamination phase, following detection of an error, so as to:
- activate the buffer register (5) writing function during predetermined backup cycles during the normal operating phase,
- connect the output of the multiplexer (6) to its first input at each cycle during the normal operating phase, and
- activate the buffer register (5) reading function and connect the output of the multiplexer (6) to its second input during predetermined cycles of the decontamination phase.

5. Assembly according to claim 4, **characterized in that** the decontamination phase begins by said predetermined cycles of the decontamination phase.

6. Assembly according to one of claims 4 and 5, **characterized in that**, the backup and reconstitution circuit being associated to a latch (2a) of the assembly that is not liable to be contaminated by the error, said predetermined cycles of the decontamination phase are hold cycles, that are followed by unhold cycles, the control device (4) comprising means for holding the latch (2a) during the hold cycles and for enabling the latch (2a) during the unhold cycles.

7. Assembly according to claim 6, **characterized in that** the control device (4) comprises means for holding the latch (2a) throughout the decontamination phase, all the cycles of the decontamination phase being hold cycles.

8. Assembly according to one of claims 4 and 5, **characterized in that**, the backup and reconstitution circuit being associated to a latch of the assembly that is liable to be contaminated by the error, the control circuit (4) connects the output of the multiplexer (6) to its first input after said predetermined cycles of the decontamination phase.

9. Assembly according to any one of claims 1 to 5, **characterized in that** each block of the assembly being liable to be affected by an error, a backup and reconstitution circuit is associated to each of the latches associated to predetermined blocks of the assembly.

10. Assembly according to claim 9, **characterized in that** a backup and reconstitution circuit is associated to each of the latches of the assembly.

11. Assembly according to any one of claims 4 to 8, **characterized in that** two consecutive backup cycles are separated by at least q cycles.

12. Assembly according to claim 11, **characterized in that** the buffer register (5) comprises two stages.

13. Assembly according to claim 11, **characterized in that** the buffer register (5) comprises a single stage.

14. Assembly according to claim 13, **characterized in that** two successive backup cycles are separated by at least 10 cycles.

15. Assembly according to claim 13, **characterized in that** the error signal generated in response to the states of a backup cycle is produced before the end of the backup cycle.

16. Assembly according to claim 15, **characterized in that** the duration of a backup cycle is greater than the duration of the other cycles.

17. Assembly according to one of the claims 13 and 15, **characterized in that** the error signal generated in response to the states of a backup cycle is produced earlier than the error signals generated in response to the states of the other cycles.

## Patentansprüche

1. Einheit aus elektronischen Schaltkreisen, die eine Mehrzahl miteinander verbundener Blöcke, Mittel zur Fehlererkennung in den von mindestens einem der Blöcke gelieferten Daten und Dekontaminationsmittel umfasst, wobei die Dekontaminationsmittel mindestens einen Schaltkreis zum Sichern und Wiederherstellen der vergangenen Zustände einer mit einem Block der Einheit verbundenen Kippschaltung umfasst, wobei der Schaltkreis zum Sichern und Wiederherstellen einen Pufferspeicher (5) nach Art eines FIFO-Speichers umfasst, Einheit, die **dadurch gekennzeichnet ist, dass** der Schaltkreis zum Sichern und Wiederherstellen einen Multiplexer umfasst, wobei der Multiplexer (6) einen ersten Eingang umfasst, der direkt an den Ausgang der Kippschaltung (2a) gelegt ist, sowie einen zweiten Eingang, der mittels des Pufferspeichers (5) an den genannten Ausgang gelegt ist.

2. Einheit nach Anspruch 1, **dadurch gekennzeichnet, dass**, wenn ein Block mit einem Schaltkreis zur Fehlerkorrektur zusammenhängt und sich der Fehler vor Entdeckung und Auslösung einer Dekontaminationsphase während q Zyklen ausbreiten kann, der Pufferspeicher (5) eines Schaltkreises zum Sichern und Wiederherstellen einer mit dem Block verbundenen Kippschaltung eine Anzahl von Stufen umfasst, die die Sicherung einer Anzahl (k) von Zuständen ermöglicht, die größer oder gleich q ist.

3. Einheit nach Anspruch 1, **dadurch gekennzeichnet, dass**, wenn ein Block mit einem Schaltkreis zur Fehlererkennung verbunden ist und sich der Fehler vor der Entdeckung und Auslösung einer Dekontaminationsphase während q Zyklen ausbreiten kann, der Pufferspeicher (5) eines Schaltkreises zum Sichern und Wiederherstellen einer mit dem genannten Block verbundenen Kippschaltung eine Anzahl von Stufen umfasst, die die Sicherung einer Anzahl (k) von Zuständen ermöglicht, die größer oder gleich q+1 ist.

4. Einheit nach einem der Ansprüche 1 bis 3, **dadurch gekennzeichnet, dass** sie Steuermittel (4) zur Kontrolle des Pufferspeichers (6) und des Multiplexers (5) während einer Phase des normalen Betriebs und während einer Dekontaminationsphase umfasst, die auf die Erkennung eines Fehlers folgt, sodass:
- der Pufferspeicher (5) während vorbestimmter Sicherungszyklen im Normalbetrieb im Schreibfunktion gebracht wird,
- während der Normalbetriebsphase der Ausgang des Multiplexers (6) bei jedem Zyklus an dessen ersten Eingang gelegt wird, und
- der Pufferspeicher (5) im Lesefunktion gebracht wird und der Ausgang des Multiplexers (6) während vorbestimmter Zyklen der Dekontaminationsphase an dessen zweiten Eingang gelegt wird.

5. Einheit nach Anspruch 4, **dadurch gekennzeichnet, dass** die Dekontaminationsphase mit den genannten vorbestimmten Zyklen der Dekontaminationsphase beginnt.

6. Einheit nach einem der Ansprüche 4 und 5, **dadurch gekennzeichnet, dass**, wenn der Schaltkreis zum Sichern und Wiederherstellen mit einer Kippschaltung (2a) der Einheit zusammenhängt, die von dem Fehler nicht kontaminiert werden kann, die vorbestimmten Zyklen der Dekontaminationsphase Blockierungszyklen sind, auf die Entriegelungszyklen folgen, wobei die Steuervorrichtung (4) Mittel zum Blockieren der Kippschaltung (2a) während der Blockierungszyklen und zur Entriegelung der Kippschaltung (2a) während der Entriegelungszyklen umfasst.

7. Einheit nach Anspruch 6, **dadurch gekennzeichnet, dass** die Steuervorrichtung (4) Mittel zum Blockieren der Kippschaltung (2a) während der gesamten Dekontaminationsphase umfasst, wobei alle Zyklen der Dekontaminationsphase Blockierungszyklen sind.

8. Einheit nach einem der Ansprüche 4 und 5, **dadurch gekennzeichnet, dass**, wenn der Schaltkreis zum Sichern und Wiederherstellen mit einer Kippschaltung der Einheit zusammenhängt, die von dem Fehler kontaminiert werden kann, die Steuerschaltung (4) den Ausgang des Multiplexers (6) nach den vorbestimmten Zyklen der Dekontaminationsphase an deren ersten Eingang legt.

9. Einheit nach einem der Ansprüche 1 bis 5, **dadurch gekennzeichnet, dass**, wenn jeder Block der Einheit von einem Fehler befallen werden kann, ein Schaltkreis zum Sichern und Wiederherstellen an jede der Kippschaltungen gelegt ist, die vorbestimmten Blöcken der Einheit entsprechen.

10. Einheit nach Anspruch 9, **dadurch gekennzeichnet, dass** ein Schaltkreis zum Sichern und Wiederherstellen an jede der Kippschaltungen der Einheit gelegt ist.

11. Einheit nach einem der Ansprüche 4 bis 8, **dadurch gekennzeichnet, dass** zwei aufeinanderfolgende Sicherungszyklen durch mindestens q Zyklen getrennt sind.

12. Einheit nach Anspruch 11, **dadurch gekennzeichnet, dass** der Pufferspeicher (5) zwei Stufen umfasst.

13. Einheit nach Anspruch 11, **dadurch gekennzeichnet, dass** der Pufferspeicher (5) eine einzige Stufe umfasst.

14. Einheit nach Anspruch 13, **dadurch gekennzeichnet, dass** zwei aufeinanderfolgende Sicherungszyklen durch mindestens 10 Zyklen getrennt sind.

15. Einheit nach Anspruch 13, **dadurch gekennzeichnet, dass** das Fehlersignal, das als Reaktion auf die Zustände eines Sicherungszyklus erzeugt wird, vor dem Ende des Sicherungszyklus erzeugt wird.

16. Einheit nach Anspruch 15, **dadurch gekennzeichnet, dass** die Dauer eines Sicherungszyklus länger ist als die Dauer der übrigen Zyklen.

17. Einheit nach einem der Ansprüche 13 und 15, **dadurch gekennzeichnet, dass** das Fehlersignal, das als Reaktion auf die Zustände eines Sicherungszyklus erzeugt wird, früher als die als Reaktion auf die Zustände der anderen Zyklen erzeugten Signale erzeugt wird.
